# EUROPEAN PATENT APPLICATION

(11) **EP 3 050 938 A1**
(43) Date of publication of application: **03.08.2016**
(21) Application number: 16000236.6
(22) Date of filing: 01.02.2016
(51) Int. Cl.: C09K 21/02, C09K 21/04, C08L 9/00, C08L 75/00, C08L 83/00

(54) **FLAME RETARDANT MATERIAL, FLAME RETARDANT FILM FORMED FROM FLAME RETARDANT MATERIAL, AND FLAME RETARDANT ARTICLE AND METHOD OF PRODUCING THE SAME**

(30) Priority: 02.02.2015 JP 2015018176
(71) Applicant: NITTO DENKO CORPORATION, Ibaraki-shi, Osaka 567-8680 (JP)
(72) Inventor: Hirano, Keisuke, Ibaraki-shi, Osaka, 567-8680 (JP)
(74) Representative: Müller-Boré & Partner Patentanwälte PartG mbB

(57) **Abstract**

Provided is a flame retardant material which is capable of imparting flame retardancy to an article, such as fabric or paper, through its application onto the article or impregnation of the article therewith, is capable of exhibiting high flame retardancy, provides a soft film, and is excellent in transparency. Also provided is a flame retardant film formed from such flame retardant material. Also provided is a flame retardant article including such flame retardant film. Also provided is a method of producing such flame retardant article. The flame retardant material includes: a resin component; a flame retardant filler; and a dispersing aid for dispersing the flame retardant filler, in which the flame retardant filler has an average particle diameter of from 5 nm to 200 nm.

## Description

The present invention relates to a flame retardant material, a flame retardant film formed from the flame retardant material, and a flame retardant article and a method of producing the same. More specifically, the present invention relates to a flame retardant material and the like capable of imparting flame retardancy to an article, such as fabric or paper, through its application onto the article or impregnation of the article therewith.

As means for making various base materials flame retardant, a predetermined amount of a flame retardant has been generally widely blended in the base materials (for example, Japanese Patent Translation Publication No. 2004-533532 and Japanese Patent Application Laid-open No. 2004-99780). A halogen-based flame retardant and an antimony-based flame retardant have hitherto been generally widely used as the flame retardant, but in recent years, their use has been limited because of environmental considerations. In view of the foregoing, a phosphorus-based flame retardant and a nitrogen-based flame retardant have been developed as an alternative flame retardant to the halogen-based flame retardant and the like, but these flame retardants have problems in flame retardancy, use durability, a handling property, and the like. Meanwhile, a flame retardant of an inorganic filler, such as aluminum hydroxide or magnesium hydroxide, has been used from the past as an environmentally friendly material exhibiting excellent flame retardancy.

However, in the case of blending the flame retardant in a resin component for forming the base material, the flame retardant needs to be blended in a thermoplastic resin, a thermosetting resin in an uncured state, or the like before formation of a molded body. In addition, the flame retardant needs to be blended in a large amount in order to enhance flame retardancy. Such blending in a large amount leads to an increase in hardness after curing, and hence it is difficult to use the flame retardant for a soft base material. Further, when the flame retardant has a small particle size, its specific surface area significantly increases, with the result that it becomes more difficult to disperse the flame retardant in the resin, and the strength of the molded body significantly lowers. Therefore, coarse particles are generally used, and hence the flame retardant is reduced in transparency. As a result, the use of the flame retardant has been limited to a masking material (for example, Japanese Patent Application Laid-open No. Hei 10-182895 and Japanese Patent Application Laid-open No. 2004-331689).

An object of the present invention is to provide a flame retardant material which is capable of imparting flame retardancy to an article, such as fabric or paper, through its application onto the article or impregnation of the article therewith, is capable of exhibiting high flame retardancy, provides a soft film, and is excellent in transparency. Another object of the present invention is to provide a flame retardant film formed from such flame retardant material. Still another object of the present invention is to provide a flame retardant article including such flame retardant film. Further still another object of the present invention is to provide a method of producing such flame retardant article.

The inventors of the present invention have made extensive investigations for achieving the above-mentioned objects. As a result, the inventors have found that the above-mentioned objects can be achieved by dispersing a flame retardant filler so that the flame retardant filler has an average particle diameter falling within a specific range. Thus, the present invention has been completed.

That is, according to one embodiment of the present invention, there is provided a flame retardant material, including: a resin component; a flame retardant filler; and a dispersing aid for dispersing the flame retardant filler, in which the flame retardant filler has an average particle diameter of from 5 nm to 200 nm.

In a preferred embodiment, the flame retardant filler has an average particle diameter of from 40 nm to 160 nm.

In a preferred embodiment, the flame retardant filler has an average particle diameter of from 60 nm to 140 nm.

In a preferred embodiment, a content of the flame retardant filler is 30 wt% or more.

In a preferred embodiment, the content of the flame retardant filler is from 30 wt% to 80 wt%.

In a preferred embodiment, the content of the flame retardant filler is from 35 wt% to 80 wt%.

In a preferred embodiment, the resin component includes an emulsion-based resin.

In a preferred embodiment, the resin component includes any one of an acrylic resin emulsion, a urethane resin emulsion, NBR latex, SBR latex, and a silicone resin.

In a preferred embodiment, the dispersing aid includes at least one kind of dispersing aid having an acid value of from 1 mgKOH/g to 20 mgKOH/g and an amine value of from 0 mgKOH/g to 10 mgKOH/g.

In a preferred embodiment, the acid value is from 3 mgKOH/g to 15 mgKOH/g.

In a preferred embodiment, the acid value is from 5 mgKOH/g to 12 mgKOH/g.

In a preferred embodiment, the amine value is from 0 mgKOH/g to 8 mgKOH/g.

In a preferred embodiment, the amine value is 0 mgKOH/g.

In a preferred embodiment, a blended amount of the dispersing aid is from 1 part by mass to 60 parts by mass with respect to 100 parts by mass of the flame retardant filler.

In a preferred embodiment, the flame retardant material further includes an antifoaming agent.

In a preferred embodiment, the antifoaming agent includes a silicone-based antifoaming agent.

A flame retardant film according to one embodiment of the present invention is formed from the flame retardant material according to the embodiment of the present invention.

A flame retardant article according to one embodiment of the present invention includes the flame retardant film according to the embodiment of the present invention.

A method of producing a flame retardant article according to one embodiment of the present invention includes forming the flame retardant film according to the embodiment of the present invention on an article.

According to the embodiments of the present invention, the flame retardant material which is capable of imparting flame retardancy to an article, such as fabric or paper, through its application onto the article or impregnation of the article therewith, is capable of exhibiting high flame retardancy, provides a soft film, and is excellent in transparency can be provided. In addition, the flame retardant film formed from such flame retardant material can be provided. In addition, the flame retardant article including such flame retardant film can be provided. Further, the method of producing such flame retardant article can be provided.

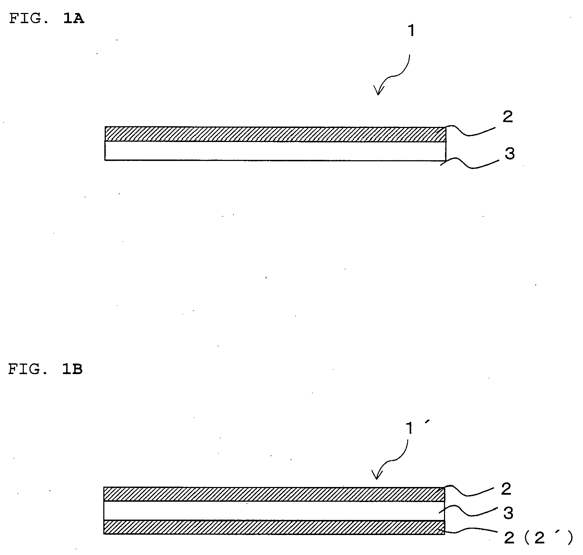

FIG. 1A and FIG. 1B are each a schematic sectional view for illustrating an example of a flame retardant article of the present invention.

### « Flame Retardant Material»

A flame retardant material of the present invention includes : a resin component; a flame retardant filler; and a dispersing aid for dispersing the flame retardant filler.

The resin component is a component which acts as a binder component constituting the flame retardant material. In the flame retardant material of the present invention, the content of the resin component is preferably from about 10 wt% to about 90 wt%, more preferably from 20 wt% to 80 wt%. When the content of the resin component is less than 10 wt%, the flame retardant material escapes in some cases. When the content of the resin component is more than 90 wt%, flame retardancy is insufficient in some cases.

In the present invention, a known resin component may be used as the resin component as long as the resin component is used as the binder component, but an emulsion-based resin is desired because the emulsion-based resin is environmentally friendly and can be used regardless of the kind of a base material. Examples of such resin component may include an acrylic resin emulsion, a melamine resin emulsion, a urethane resin emulsion, a rubber-based resin emulsion, NBR latex, SBR latex, and a silicone resin. Of those resin components, an acrylic resin emulsion, a urethane resin emulsion, NBR latex, SBR latex, and a silicone resin are more preferred.

Examples of the acrylic resin emulsion may include "DICNAL" series and "VONCOAT" series manufactured by DIC Corporation, and "AE" series manufactured by Emulsion Technology Co., Ltd.

Examples of the urethane resin emulsion may include "SUPERFLEX" series manufactured by DKS Co. Ltd., "BURNOCK" series manufactured by DIC Corporation, and "UCOAT" series manufactured by Sanyo Chemical Industries, Ltd.

Examples of the NBR latex may include "Nipol" series manufactured by Zeon Corporation and "CYATEX" series manufactured by Nippon A&L Inc.

Examples of the SBR latex may include "Lacstar" series manufactured by DIC Corporation, "PCL" series and "SB latex" series manufactured by JSR Corporation, and "Asahi Kasei latex" series manufactured by Asahi Kasei Corp.

The silicone resin is at least one kind selected from an addition-type silicone resin, a self-crosslinking-type silicone resin, a silicone resin component of a silicone rubber film-forming-type emulsion, and silicone rubber powder.

The number of kinds of the addition-type silicone resins may be only one or two or more. The adoption of the addition-type silicone resin can eliminate a problem of poor solvent resistance, unlike in the case of conventional organic resins.

Examples of the addition-type silicone resin include a room temperature vulcanizing silicone rubber (RTV silicone rubber), a low temperature vulcanizing silicone rubber (LTV silicone rubber), and a silicone resin component of an O/W-type emulsion obtained by emulsifying reactive silicone with an emulsifier. Of those, a room temperature vulcanizing silicone rubber (RTV silicone rubber) and a silicone resin component of an O/W-type emulsion obtained by emulsifying reactive silicone with an emulsifier are preferred in order to further exhibit the effects of the present invention.

Examples of the O/W-type emulsion obtained by emulsifying reactive silicone with an emulsifier include "Polon MR" and "Polon MK-206" manufactured by Shin-Etsu Chemical Co., Ltd.

The number of kinds of the self-crosslinking-type silicone resins may be only one or two or more. The self-crosslinking-type silicone resin does not require a catalyst. The adoption of the self-crosslinking-type silicone resin enables the use of the flame retardant material without influences of storage stability of a silicone resin solution, climate, temperature, humidity, and the like.

Examples of the self-crosslinking-type silicone resin include "Polon MF-56", "KM-2002L-1", "KM-2002T", "X-51-1318", and "X-52-1631" manufactured by Shin-Etsu Chemical Co., Ltd.

The number of kinds of the silicone rubber film-forming-type emulsions may be only one or two or more. The silicone rubber film-forming-type emulsion is an emulsion which forms a silicone rubber film by being dried, and there are silicone rubber film-forming-type emulsions of a self-crosslinking type not requiring a catalyst and of a two component type to be used in combination with a catalyst. The adoption of the silicone rubber film-forming-type emulsion enables formation of a tough film as compared to conventional silicone emulsions, and hence the film can have resistance to a scratch or the like.

Examples of the silicone rubber film-forming-type emulsion include "Polon MF-56", "KM-2002L-1", "KM-2002T", "X-51-1318", "X-52-1631", "KM-9749", and "Polon MF-40" manufactured by Shin-Etsu Chemical Co. , Ltd. Of those, for example, "Polon MF-56", "KM-2002L-1", "KM-2002T", "X-51-1318", and "X-52-1631" are also the self-crosslinking-type silicone resins described above.

The number of kinds of the silicone rubber powders may be only one or two or more. The silicone rubber powder is preferably obtained by removing water from a water dispersion of the silicone rubber powder. The adoption of the silicone rubber powder enables a significant increase in the strength of a silicone film to be obtained, improvements in texture and the like of the silicone film through irregularities formed by adjustment of a powder size on the surface of the film, or easy peeling of the silicone films when these films are laminated on each other.

Examples of the water dispersion of the silicone rubber powder include "KM-9729" and "X-52-1133" manufactured by Shin-Etsu Chemical Co., Ltd.

In the case where the silicone resin in the flame retardant material of the present invention is a silicone resin of an emulsion, the emulsion may contain any appropriate other material within a range not impairing the effects of the present invention. Examples of such other material include colloidal silica, a metal oxide sol, a fluorine-based emulsion, and a silicone-based emulsion.

Examples of the colloidal silica include "SNOWTEX" series manufactured by Nissan Chemical Industries, Ltd.. , "Quartron" series manufactured by Fuso Chemical Co., Ltd., and "ADELITE AT" series manufactured by ADEKA Corporation.

Examples of the metal oxide sol include a titania sol, a zirconia sol, an alumina sol, and a barium titanate sol. Examples of the titania sol include "TKS" series manufactured by Tayca Corporation, "DC-Ti" series and "DCN-Ti" series manufactured by Fuji Titanium Industry Co., Ltd. Examples of the zirconia sol include "NanoUse" series manufactured by Nissan Chemical Industries, Ltd. and "Aqueous nanozirconia dispersion" manufactured by Sumitomo Osaka Cement Co., Ltd. Examples of the alumina sol include "AS" series manufactured by Nissan Chemical Industries, Ltd. and "BIRAL A1" series manufactured by Taki Chemical Co., Ltd.

Examples of the fluorine-based emulsion include "UNIDYNE" series manufactured by Daikin Industries, Ltd. and "SFcoat" manufactured by AGC Seimi Chemical Co. , Ltd. Examples of "UNIDYNE" series include "TG4571", "5541", "5545", "5546", and "5601".

The number of kinds of the the flame retardant fillers may be only one or two or more.

A preferred example of the flame retardant filler is an inorganic filler having flame retardancy, and examples thereof include a metal hydroxide, a metal oxide, a metal, and ceramics. Specific examples thereof include aluminum hydroxide, magnesium hydroxide, zirconium hydroxide, basic magnesium carbonate, dolomite, hydrotalcite, calcium hydroxide, barium hydroxide, a hydrate of tin oxide, a hydrate of an inorganic metal compound, such as borax, zinc borate, zinc metaborate, barium metaborate, zinc carbonate, magnesium-calcium carbonate, calcium carbonate, barium carbonate, magnesium oxide, molybdenum oxide, zirconium oxide, tin oxide, antimony oxide, and red phosphorus. Those flame retardant fillers may be subjected to surface treatment, such as silane coupling treatment or stearic acid treatment. Of those, aluminum hydroxide and magnesium hydroxide are preferred as the flame retardant filler in order to further exhibit the effects of the present invention.

The flame retardant filler may have a regular shape or an irregular shape. For example, the flame retardant filler may have a polygonal shape, a cubic shape, an elliptical shape, a spherical shape, a needle shape, a flat plate shape, a flake shape, or a combination shape thereof, or may be in the form of an aggregate thereof.

In the present invention, the flame retardant filler in the flame retardant material has an average particle diameter of from 5 nm to 200 nm, preferably from 20 nm to 180 nm, more preferably from 40 nm to 160 nm, particularly preferably from 60 nm to 140 nm. When the average particle diameter of the flame retardant filler is less than 5 nm, a decomposition temperature lowers in some cases. When the average particle diameter of the flame retardant filler is more than 200 nm, it is difficult to obtain transparency, and a lack of flexibility occurs in some cases.

It should be noted that, in the present invention, the average particle diameter of the flame retardant filler in the flame retardant material refers to the average particle diameter of primary particles, and may be defined as D50 (median diameter). In addition, as its measurement method, a method described in Examples described later can be applied.

In the flame retardant material of the present invention, the content of the flame retardant filler is preferably 30 wt% or more, more preferably from 30 wt% to 80 wt%, still more preferably from 35 wt% to 80 wt%. When the content of the flame retardant filler is less than 30 wt%, high flame retardancy cannot be obtained in some cases. When the content of the flame retardant filler is more than 80 wt%, it is difficult to obtain the transparency, and a lack of the flexibility occurs in some cases.

In the present invention, the number of kinds of the dispersing aids may be only one or two or more.

The dispersing aid is a component for dispersing the flame retardant filler, and a polymer-based dispersing aid may be suitably used. As the polymer-based dispersing aid, there is given an amphiphatic copolymer in which a functional group having high affinity for the surface of the flame retardant filler is introduced in a high-molecular-weight polymer and which has a structure including a solvating moiety. The dispersing aid has a number average molecular weight of from 7,000 to 500,000, preferably from 8,000 to 200,000. When the number average molecular weight is excessively high, handling is difficult in some cases owing to an excessively high viscosity.

The polymer-based dispersing aid is not particularly limited, but an example thereof is a polymer having a functional group having affinity for the flame retardant filler on its main or side chain. As a polymer constituting the main chain, there are given, for example, a vinyl-based polymer, a polyester-based polymer, a polyurethane-based polymer, an acrylic polymer, a polyether-based polymer, a polyamide-based polymer, and a composite thereof. In addition, as the functional group having affinity for the flame retardant filler, there is given a group having a polar group, such as a carboxyl group, a phosphoric acid group, a sulfonic acid group, a carboxylic acid ester group, a phosphoric acid ester group, a sulfonic acid ester group, a carboxylate salt, a phosphate salt, a sulfonate salt, a hydroxyl group, an amino group, or an amide group.

As the polymer-based dispersing aid, there may be specifically used "DISPERBYK" series manufactured by BYK Japan KK, "SOLSPERSE" series and "SOLPLUS" series manufactured by Lubrizol Corporation, "EFKA" series manufactured by Wilbur-Ellis, and "AJISPER" series manufactured by Ajinomoto Fine-Techno Co., Inc., "DISPARLON" manufactured by Kusumoto Chemicals, Ltd. , and the like.

It is preferred that the dispersing aid include at least one kind of dispersant having an acid value of from 1 mgKOH/g to 20 mgKOH/g and an amine value of from 0 mgKOH/g to 10 mgKOH/g. In particular, the dispersing aid has an acid value of more preferably from 3 mgKOH/g to 15 mgKOH/g, still more preferably from 5 mgKOH/g to 12 mgKOH/g. In addition, the dispersing aid has an amine value of more preferably from 0 mgKOH/g to 8 mgKOH/g, still more preferably 0 mgKOH/g.

The use of the dispersing aid having an acid value of from 1 mgKOH/g to 20 mgKOH/g and an amine value of from 0 mgKOH/g to 10 mgKOH/g can provide such an effect that the dispersibility of the flame retardant filler can be improved. On the other hand, when the acid value is less than 1 mgKOH/g, dispersion is poor in some cases. When the acid value is more than 20 mgKOH/g, the viscosity of the flame retardant material increases in some cases. In addition, when the amine value is more than 10 mgKOH/g, the flame retardant material aggregates in some cases.

With regard to the blended amount of the dispersing aid in the flame retardant material of the present invention, the dispersing aid may be used so as to achieve a predetermined dispersed state of the flame retardant filler, and may be blended by appropriately adjusting its blended amount depending on the kinds of the resin and the flame retardant filler, and the used amount of the flame retardant filler. In general, the blended amount is recommended to be from about 1 part by mass to about 60 parts by mass, and is preferably from about 5 parts by mass to about 40 parts by mass with respect to 100 parts by mass of the flame retardant filler. When the blended amount of the dispersing aid is small, the flame retardant filler in the flame retardant material cannot be dispersed with a predetermined average particle diameter in some cases. In addition, a stable dispersed state is not obtained in some cases. When the blended amount is too large, the flame retardancy lowers in some cases.

In addition to the above-mentioned components, the flame retardant material of the present invention may further include an antifoaming agent. The blending of the antifoaming agent enables suppression of bubbles at the time of dispersion. A known antifoaming agent may be used, and examples thereof may include a silicone-based antifoaming agent, a mineral oil-based antifoaming agent, and a polymer-based antifoaming agent free of silicon. Of those, in the present invention, it is preferred to use a silicone-based antifoaming agent from the viewpoint of not impairing the flame retardancy. Examples of such antifoaming agent include "BYK" series manufactured by BYK Japan KK, "SLFOAM" series manufactured by Wacker Asahikasei Silicone Co., Ltd., and "KM" series manufactured by Shin-Etsu Chemical Co., Ltd.

In the flame retardant material of the present invention, in addition to the above-mentioned components, there may be used known additives, such as a thickener, a wetting agent, a foaming agent, a pigment, a dye, a plasticizer, an antioxidant, an ultraviolet absorber, and a preservative.

### «Method of Producing Flame Retardant Material»

The flame retardant material of the present invention may be obtained by, for example, mixing and stirring the resin component, the flame retardant filler, and the dispersing aid, and the antifoaming agent and the other components as required. Those components may be mixed and stirred at one time, but it is preferred to mix and stir the flame retardant filler and the dispersing aid in advance to obtain a particle dispersion having a predetermined average particle diameter, and then mix the dispersion and the resin component.

In the production of the flame retardant material of the present invention, mill treatment may be performed concurrently at the time of the mixing and stirring. Specifically, at the time of the mixing and stirring, any appropriate beads or the like are added, and mill pulverization may be performed with a mill pulverizer or the like. Through such mill treatment, the average particle diameter of the flame retardant filler in the flame retardant material of the present invention can be adjusted to fall within a predetermined range.

Examples of the beads usable in the mill treatment include zirconia beads, alumina beads, glass beads, stainless steel beads, nylon beads, Teflon (trademark) beads, steel spheres, nylon-covered stainless steel beads, and polyimide beads. Of those, zirconia beads, which each have a high specific gravity and a high surface hardness, are suitably used.

As the form of the flame retardant material of the present invention, any appropriate form, such as a liquid form, a semiliquid form, or a solid form, may be adopted depending on the kind of each component and the content ratio of the components. As the liquid form, any appropriate form, such as a homogeneous liquid form or a dispersion liquid form, may be adopted depending on the kind of each component and the content ratio of the components.

### « Flame Retardant Film»

A flame retardant film of the present invention is formed from the flame retardant material of the present invention.

The flame retardant film of the present invention is preferably formed by applying the flame retardant material of the present invention, followed by drying or, in the case of using a curable resin component, such as the addition-type silicone resin, curing the curable resin component.

As the thickness of the flame retardant film of the present invention, any appropriate thickness may be adopted depending on a purpose. Such thickness of the flame retardant film is preferably from 1 µm to 100 µm, more preferably from 5 µm to 80 µm, still more preferably from 10 µm to 50 µm.

In the case of forming the flame retardant film from the flame retardant material, the flame retardant film may be formed by applying the flame retardant material so as to achieve a predetermined thickness, followed by heating and drying at from 60°C to 160°C for from about 1 minute to about 10 minutes.

### « Flame Retardant Article»

A flame retardant article of the present invention includes the flame retardant film of the present invention.

The flame retardant article of the present invention may have any appropriate structure as long as the flame retardant article includes the flame retardant film of the present invention.

As typical examples of the flame retardant article of the present invention, there are given a flame retardant article **1** including a flame retardant film **2** of the present invention on one surface of a base material **3** as illustrated in FIG. **1A****,** and a flame retardant article **1'** including the flame retardant films **2** of the present invention on both surfaces of the base material **3** as illustrated in FIG. **1B****.** In the case where the flame retardant films **2** of the present invention are provided on both the surfaces of the base material **3,** the same flame retardant film **2** or different flame retardant films **2 (2')** may be provided on both the surfaces of the base material.

The base material preferably has a sheet shape or a plate shape . It should be noted that the base material may have a curved surface. That is, the "sheet shape" as used herein means not only a flat sheet shape but also a sheet shape having a three-dimensional curved surface. The "plate shape" as used herein means not only a flat plate shape but also a plate shape having a three-dimensional curved surface. In addition, the base material may be non-porous or porous.

With regard to a material of the base material, any appropriate base material may be adopted. For example, a resin film, paper, fabric, a rubber sheet, a foam sheet, a metal foil, a composite thereof, or the like may be used. Examples of the resin film include: a polyolefin film, such as polyethylene (PE), polypropylene (PP), or an ethylene-propylene copolymer; a polyester film, such as PET or polyethylene naphthalate (PEN); a vinyl chloride resin film; a vinyl acetate resin film; a polyimide resin film; a polyamide resin film; a fluororesin film; and a cellophane. Examples of the paper include Japanese paper, craft paper, glassine paper, high-quality paper, synthetic paper, and top coat paper. Examples of the fabric include woven fabric and non-woven fabric formed of one kind or a blend of two or more kinds of various fibrous materials. Examples of such fibrous material include cotton, staple fiber, manila hemp, pulp, rayon, acetate fiber, polyester fiber, polyvinyl alcohol fiber, polyamide fiber, and polyolefin fiber. Examples of the rubber sheet include a natural rubber sheet and a butyl rubber sheet. Examples of the foam sheet include a polyurethane foam sheet and a polychloroprene rubber foam sheet. Examples of the metallic foil include an aluminum foil and a copper foil.

Any appropriate thickness may be adopted as the thickness of the base material depending on a purpose. Such thickness of the base material is preferably from 3 µm to 3, 000 µm, more preferably from 10 µm to 3,000 µm, still more preferably from 10 µm to 2,500 µm, particularly preferably from 15 µm to 2,500 µm.

The flame retardant article of the present invention may be provided with a functional layer, such as an antifouling layer, an antistatic layer, a light diffusion layer, an antireflection layer, an ultraviolet absorbing layer, a heat shielding layer, a heat insulating layer, a heat conducting layer, or a solvent resistant layer, within a range not impairing the flame retardancy.

### «Method of Producing Flame Retardant Article»

A method of producing a flame retardant article of the present invention includes forming the flame retardant film formed from the flame retardant material on an article. Specifically, the forming may include applying the flame retardant material of the present invention on any appropriate base material, followed by drying or, in the case of using a curable resin component, such as the addition-type silicone resin, curing the curable resin component. According to the method of producing a flame retardant article of the present invention, the flame retardant film can be formed on any appropriate base material to make the base material flame retardant, which eliminates the need for such formulation that a flame retardant is blended in a thermoplastic resin, a thermosetting resin in an uncured state, or the like constituting the base material in advance before the formation of the base material.

It should be noted that, in the case where the base material is an absorbent article, such as fabric or a foam body, the flame retardant article may also be obtained by impregnating the base material with the flame retardant material. In this case, a flame retardant article in which not only the surface of the base material but also the inside thereof is impregnated with the flame retardant film can be obtained.

### Examples

Next, the present invention is more specifically described by way of Examples and Comparative Examples. However, the present invention is not limited to these Examples and Comparative Examples. It should be noted that, in the following description, "part(s)" and "%" are by mass unless otherwise specified.

### <Average Particle Diameter>

A particle dispersion was diluted with water so as to achieve a solid content concentration of from about 0.01 wt% to about 0.1 wt%, and measured for a particles size distribution with a particle size distribution analyzer Microtrac MT3000II (Nikkiso Co. , Ltd.). An average particle diameter (D50) was determined therefrom. The measurement was performed three times for 30 seconds, and the average value was adopted.

### (Preparation of Particle Dispersion A)

30 g of aluminum hydroxide (HIGILITE H-43M, manufactured by Showa Denko K.K.), 7.5 g of a dispersant (DISPERBYK-190, solid content concentration: 40%, acid value: 10, amine value: 0, manufactured by BYK Japan KK), 0.5 g of an antifoaming agent (BYK-024, manufactured by BYK Japan KK), 112 g of water, and 200 g of zirconia beads each having a size of 0.5 mm were added to a 200-ml glass bottle, followed by pulverization and dispersion with a skandex (manufactured by O-well Corporation) for 10 hours. Thus, a particle dispersion A in which aluminum hydroxide had an average particle diameter of 101 nm was obtained.

### (Preparation of Particle Dispersion B)

30 g of aluminum hydroxide (HIGILITE H-42M, manufactured by Showa Denko K.K.), 7.5 g of a dispersant (DISPERBYK-2015, solid content concentration: 40%, acid value: 10, amine value: 0, manufactured by BYK Japan KK), 0.5 g of an antifoaming agent (BYK-024, manufactured by BYK Japan KK), 112 g of water, and 200 g of zirconia beads each having a size of 0.5 mm were added to a 200-ml glass bottle, followed by pulverization and dispersion with a skandex (manufactured by O-well Corporation) for 10 hours. Thus, a particle dispersion B in which aluminum hydroxide had an average particle diameter of 105 nm was obtained.

### (Preparation of Particle Dispersion C)

A particle dispersion C in which aluminum hydroxide had an average particle diameter of 120 nm was obtained with the same formulation as that of the particle dispersion B except that the dispersant was changed to DISPERBYK-2012 (solid content concentration: 40%, acid value: 7, amine value: 7, manufactured by BYK Japan KK).

### (Preparation of Particle Dispersion D)

A particle dispersion D in which aluminum hydroxide had an average particle diameter of 525 nm was obtained with the same formulation as that of the particle dispersion B except that the dispersant was changed to DISPERBYK-193 (solid content concentration: 40%, acid value: 0, amine value: 0).

### (Preparation of Particle Dispersion E)

A particle dispersion E in which aluminum hydroxide had an average particle diameter of 750 nm was obtained with the same composition as that of the particle dispersion A through stirring with a disper for 1 hour without the pulverization with a skandex.

### (Reference Example 1)

The same formulation as that of the particle dispersion B was adopted except that the dispersant was changed to 3.5 g of ANTI-TERRA-250 (solid content concentration: 70%, acid value: 46, amine value: 41, manufactured by BYK Japan KK) and the amount of water was changed to 116 g, but solidification occurred during the dispersion and an intended dispersion was not able to be obtained.

### [Example 1]

15 g of a silicone resin emulsion (Polon MF-56, average particle diameter: 370 nm, manufactured by Shin-Etsu Chemical Co., Ltd.) was added to 30 g of the particle dispersion A, followed by stirring, to yield a flame retardant material 1. Through measurement of a particle size distribution, it was found that aluminum hydroxide had an average particle diameter of 105 nm. The flame retardant material 1 was used to be applied onto a PET film (Lumirror S10, manufactured by Toray Industries, Inc.) having a film thickness of 38 µm so as to achieve a thickness of 30 µm after drying, and subjected to curing at 120°C for 10 minutes. Thus, a flame retardant article 1 in which a flame retardant film was formed on the PET film was obtained.

### [Example 2]

12 g of a urethane resin emulsion (SUPERFLEX E-2000, average particle diameter: 700 nm, manufactured by DKS Co. Ltd.) was added to 30 g of the particle dispersion B, followed by stirring, to yield a flame retardant material 2. Through measurement of a particle size distribution, it was found that aluminum hydroxide had an average particle diameter of 107 nm. The flame retardant material 2 was used to be applied onto a PET film (Lumirror S10, manufactured by Toray Industries, Inc.) having a film thickness of 38 µm so as to achieve a thickness of 30 µm after drying, and subjected to curing at 120°C for 10 minutes. Thus, a flame retardant article 2 in which a flame retardant film was formed on the PET film was obtained.

### [Example 3]

15 g of an acrylic resin emulsion (DICNAL-DN-515, average particle diameter: 278 nm, manufactured by DIC Corporation) was added to 30 g of the particle dispersion C, followed by stirring, to yield a flame retardant material 3. Through measurement of a particle size distribution, it was found that aluminum hydroxide had an average particle diameter of 132 nm. The flame retardant material 3 was used to be applied onto a PET film (Lumirror S10, manufactured by Toray Industries, Inc.) having a film thickness of 38 µm so as to achieve a thickness of 30 µm after drying, and subjected to curing at 120°C for 10 minutes. Thus, a flame retardant article 3 in which a flame retardant film was formed on the PET film was obtained.

### [Example 4]

15 g of a commercially available carboxy modified SB latex (JSR0533, average particle diameter: 105 nm, manufactured by JSR Corporation) was added to 30 g of the particle dispersion A, followed by stirring, to yield a flame retardant material 4. Through measurement of a particle size distribution, it was found that aluminum hydroxide had an average particle diameter of 105 nm. The flame retardant material 4 was used to be applied onto a PET film (Lumirror S10, manufactured by Toray Industries, Inc.) having a film thickness of 38 µm so as to achieve a thickness of 30 µm after drying, and subjected to curing at 120°C for 10 minutes. Thus, a flame retardant article 4 in which a flame retardant film was formed on the PET film was obtained.

### [Example 5]

15 g of a carboxy modified NBR latex (Nipol LX550, average particle diameter: 110 nm, manufactured by Zeon Corporation) was added to 30 g of the particle dispersion A, followed by stirring, to yield a flame retardant material 5. Through measurement of a particle size distribution, it was found that aluminum hydroxide had an average particle diameter of 108 nm. The flame retardant material 5 was used to be applied onto a PET film (Lumirror S10, manufactured by Toray Industries, Inc.) having a film thickness of 38 µm so as to achieve a thickness of 30 µm after drying, and subjected to curing at 120°C for 10 minutes. Thus, a flame retardant article 5 in which a flame retardant film was formed on the PET film was obtained.

### [Example 6]

15 g of a modified SBR latex (Lacstar DM816, average particle diameter: 114 nm, manufactured by DIC Corporation) was added to 30 g of the particle dispersion A, followed by stirring, to yield a flame retardant material 6. Through measurement of a particle size distribution, it was found that aluminum hydroxide had an average particle diameter of 111 nm. The flame retardant material 6 was used to be applied onto a PET film (Lumirror S10, manufactured by Toray Industries, Inc.) having a film thickness of 38 µm so as to achieve a thickness of 30 µm after drying, and subjected to curing at 120°C for 10 minutes. Thus, a flame retardant article 6 in which a flame retardant film was formed on the PET film was obtained.

### [Comparative Example 1]

15 g of a silicone resin emulsion (Polon MF-56, average particle diameter: 370 nm, manufactured by Shin-Etsu Chemical Co. , Ltd.) was added to 30 g of the particle dispersion D, followed by stirring, to yield a flame retardant material 7. Through measurement of a particle size distribution, it was found that aluminum hydroxide had an average particle diameter of 512 nm. The flame retardant material 7 was used to be applied onto a PET film (Lumirror S10, manufactured by Toray Industries, Inc.) having a film thickness of 38 µm so as to achieve a thickness of 30 µm after drying, and subjected to curing at 120°C for 10 minutes. Thus, a flame retardant article 7 in which a flame retardant film was formed on the PET film was obtained.

### [Comparative Example 2]

15 g of a silicone resin emulsion (Polon MF-56, average particle diameter: 370 nm, manufactured by Shin-Etsu Chemical Co. , Ltd.) was added to 30 g of the particle dispersion E, followed by stirring, to yield a flame retardant material 8. Through measurement of a particle size distribution, it was found that aluminum hydroxide had an average particle diameter of 731 nm. The flame retardant material 8 was used to be applied onto a PET film (Lumirror S10, manufactured by Toray Industries, Inc.) having a film thickness of 38 µm so as to achieve a thickness of 30 µm after drying, and subjected to curing at 120°C for 10 minutes. Thus, a flame retardant article 8 in which a flame retardant film was formed on the PET film was obtained.

### <Evaluation of Flame Retardancy>

As evaluation of flame retardancy, examination was performed in conformity to a test method of UL-94 standard.

Specifically, the flame retardant articles obtained in Examples and Comparative Examples were each used as a sample by being cut into a size of 12.7 mm×127 mm. Flame of a gas burner having a length of 19 mm was applied to the lower end of each sample vertically retained for 10 seconds. In the case where combustion stopped within 30 seconds, flame was applied thereto for another 10 seconds. Gauze was placed 30 cm below the sample, and combustion thereof was also confirmed. The evaluation was performed on the basis of the following criteria.
⊚: The case where the sample passed all the combustion tests, and the sample retained its shape.
○: The case where the sample passed both the 10-second flame applications, but the sample did not retain its shape.
Δ: The case where the sample ignited in the second flame application.
×: The case where the sample ignited in the first flame application.

### <Total Light Transmittance and Haze Value>

The flame retardant articles obtained in Examples and Comparative Examples were each measured for a total light transmittance and a haze value with a haze meter (HM150, manufactured by Murakami Color Research Laboratory).

A total light transmittance of 60% or more was judged as good, and a haze value of 60% or less was judged as good. The total light transmittance is more preferably 70% or more. In addition, the haze value is more preferably 50% or less.

### <Evaluation of Film Flexibility>

The flame retardant articles obtained in Examples and Comparative Examples were each used as an evaluation sample. Each evaluation sample was bent by 180 degrees and left for 5 seconds, and then turned back to its original state. On this occasion, the condition of flaws at a crease was examined. The evaluation was performed on the basis of the following criteria.
○: There are no flaws.
Δ: A wrinkle remains.
×: The sample completely breaks.

The results of the evaluations were shown in Table 1.

**[Table 1]**

| | Resin component | Particle dispersion | Dispersant | | | Average particle diameter [nm] | Flame retardancy | Total light transmittance [%] | Haze value [%] | Flexibility |
|---|---|---|---|---|---|---|---|---|---|---|
| | | | Kind | Acid value | Amine value | | | | | |
| Example 1 | Polon MF-56 (silicone) | A | DISPERBYK-190 | 10 | 0 | 105 | ⊚ | 81.7 | 45.0 | ○ |
| Example 2 | SF E-2000 (urethane) | B | DISPERBYK-2015 | 10 | 0 | 107 | ⊚ | 78.9 | 47.9 | ○ |
| Example 3 | DICNAL DN-515 (acrylic) | C | DISPERBYK-2012 | 7 | 7 | 132 | ○ | 78.3 | 43.8 | ○ |
| Example 4 | JSR0533 | A | DISPERBYK-190 | 10 | 0 | 105 | ⊚ | 88.6 | 10.8 | ○ |
| Example 5 | Nipol LX550 (NBR) | A | DISPERBYK-190 | 10 | 0 | 108 | ○ | 88.0 | 13.5 | Δ |
| Example 6 | Lacstar DM816 (SBR) | A | DISPERBYK-190 | 10 | 0 | 111 | ○ | 85.1 | 15.4 | Δ |
| Comparative Example 1 | Polon MF-56 (silicone) | D | DISPERBYK-193 | 0 | 0 | 512 | ⊚ | 35.6 | 99.8 | Δ |
| Comparative Example 2 | Polon MF-56 (silicone) | E | DISPERBYK-190 | 10 | 0 | 731 | ○ | 22.8 | 97.5 | × |

It is revealed that the flame retardant materials of Examples 1 to 6, which each include the resin component, the flame retardant filler, and the dispersing aid and in each of which the flame retardant filler has an average particle diameter of from 5 nm to 200 nm, achieve high flame retardancy, flexibility, and excellent transparency. On the other hand, it is revealed that the flame retardant materials of Comparative Examples 1 and 2, in each of which the flame retardant filler has an average particle diameter of more than 200 nm, are inferior in flexibility and transparency. It should be noted that, as shown as Reference Example, in the case of using a dispersant having a high acid value and a high amine value, solidification occurred during the dispersion, and a flame retardant material was not able to be obtained.

The flame retardant material, flame retardant film, and flame retardant article of the present invention can be applied to various fields requiring flame retardancy. The flame retardant material of the present invention can be applied to, for example, a transporter, such as a vehicle or an aircraft, a construction material, an electronic material, a wire, a cable, a door, a panel, a curtain, a carpet, furniture, a sun blind, a wall, a ceiling, an interior decorating material, a filling in a box or the like, foam, or a sealing material. In particular, the flame retardant material of the present invention is excellent in transparency, and hence can impart flame retardancy without impairing the design property of a base material. In addition, the flame retardant material of the present invention is excellent in flexibility, and hence can be suitably used for flame retardant treatment of a fabric base material, a paper base material, or the like.

## Claims

1. A flame retardant material, comprising: a resin component; a flame retardant filler; and a dispersing aid for dispersing the flame retardant filler,
wherein the flame retardant filler has an average particle diameter of from 5 nm to 200 nm.

2. The flame retardant material according to claim 1, wherein the flame retardant filler has an average particle diameter of from 40 nm to 160 nm, preferably of from 60 nm to 140 nm.

3. The flame retardant material according to claim 1 or 2, wherein a content of the flame retardant filler is 30 wt% or more, preferably from 30 wt% to 80 wt%, more preferably from 35 wt% to 80 wt%.

4. The flame retardant material according to any one of claims 1 to 3, wherein the resin component comprises an emulsion-based resin.

5. The flame retardant material according to claim 4, wherein the resin component comprises any one of an acrylic resin emulsion, a urethane resin emulsion, NBR latex, SBR latex, and a silicone resin.

6. The flame retardant material according to any one of claims 1 to 5, wherein the dispersing aid comprises at least one kind of dispersing aid having an acid value of from 1 mgKOH/g to 20 mgKOH/g and an amine value of from 0 mgKOH/g to 10 mgKOH/g.

7. The flame retardant material according to claim 6, wherein the acid value is from 3 mgKOH/g to 15 mgKOH/g, preferably from 5 mgKOH/g to 12 mgKOH/g.

8. The flame retardant material according to claim 6 or 7, wherein the amine value is from 0 mgKOH/g to 8 mgKOH/g, preferably 0 mgKOH/g.

9. The flame retardant material according to any one of claims 1 to 8, wherein a blended amount of the dispersing aid is from 1 part by mass to 60 parts by mass with respect to 100 parts by mass of the flame retardant filler.

10. The flame retardant material according to any one of claims 1 to 9, further comprising an antifoaming agent.

11. The flame retardant material according to claim 10, wherein the antifoaming agent comprises a silicone-based antifoaming agent.

12. A flame retardant film, which is formed from the flame retardant material of any one of claims 1 to 11.

13. A flame retardant article, comprising the flame retardant film of claim 12.

14. A method of producing a flame retardant article, the method comprising forming the flame retardant film of claim 12 on an article.
